# EUROPEAN PATENT APPLICATION

(11) **EP 4 671 579 A1**
(43) Date of publication of application: **31.12.2025**
(21) Application number: 23924202.7
(22) Date of filing: 28.11.2023
(51) Int. Cl.: F16K 11/076

(54) **FLOW PASSAGE SWITCHING VALVE**

(30) Priority: 24.02.2023 JP 2023027791
(71) Applicant: Fujikoki Corporation, Tokyo 158-0082 (JP)
(72) Inventor: KONDO, Daisuke, Tokyo 158-0082 (JP); HARA, Seiichi, Tokyo 158-0082 (JP); MOCHIZUKI, Kenichi, Tokyo 158-0082 (JP); HARADA, Takao, Tokyo 158-0082 (JP)
(74) Representative: Ter Meer Steinmeister & Partner
(86) International application number: PCT/JP2023/042622
(87) International publication number: WO 2024/176558

(57) **Abstract**

A flow path switching valve includes a valve unit including: a valve body that includes a first inlet/outlet opening and a second inlet/outlet opening, through each of which a fluid is capable of entering or exiting, formed on a wall surface of a valve chest and includes a third inlet/outlet opening formed on a bottom surface of the valve chest; a valve element that is rotatably disposed in the valve chest; a first port that is communicated with the first inlet/outlet opening; a second port that is communicated with the second inlet/outlet opening; and a third port that is communicated with the third inlet/outlet opening, the flow path switching valve includes a rotation drive unit that is connected to the valve unit and rotates the valve element, and the first port and the second port of the valve unit can be connected with the first port and the second port of another valve unit, respectively.

## Description

### Technical Field

The present disclosure relates to a flow path switching valve.

### Background Art

Chinese Patent Application Publication No. 111828682 (Patent Document 1) discloses a control valve (flow path switching valve) having a valve element that rotates in a valve body and having five or more ports (pipe joints).

Japanese Patent Application Laid-Open (JP-A) No. 2020-94624 (Patent Document 2) discloses a flow path switching box including a housing including an inflow port and a plurality of discharge ports, a chamber connected to the inflow port, and a plurality of solenoid valves provided in the housing and each including a movable element movable relative to a stator, in which the plurality of solenoid valves have inlets connected to the chamber and outlets connected respectively to the discharge ports, and are each independently configured to be capable of switching between states of permitting and not permitting discharge of a fluid from the outlets.

Japanese Patent No. 5560006 (Patent Document 3) discloses a structure in which a plurality of combination valves are juxtaposed and stacked, inflow ports of a first fluid of the combination valves directly communicate with each other, delivery ports of the first fluid of the combination valves directly communicate with each other, inflow ports of a second fluid of the combination valves directly communicate with each other, and delivery ports of the second fluid of the combination valves directly communicate with each other.

### SUMMARY OF INVENTION

### Technical Problem

However, the conventional example described in Patent Document 1 or 2 described above has no degree of freedom because the number of connection ports and the combination of flow paths are fixed according to the specification, and it is considered that a change in the specification requires starting over from the design.

In a configuration in which a plurality of valve bodies are juxtaposed and stacked as in the conventional example described in Patent Document 3 described above, for example, a structure for connection of the valve bodies, such as a hole through which a through bolt is passed, is required, and downsizing of the valve bodies is difficult.

An object of the present disclosure is to enable easy realization of flow path switching valves of various specifications using a plurality of valve units, and to downsize a flow path switching valve.

### Solution to Problem

A flow path switching valve according to a first aspect includes a valve unit including: a valve body that includes a valve chest formed inside the valve body, a first inlet/outlet opening and a second inlet/outlet opening, through each of which a fluid is capable of entering or exiting, formed on a wall surface forming the valve chest, the first inlet/outlet opening and the second inlet/outlet opening through each of which a fluid enters or exits, and a third inlet/outlet opening formed on a bottom surface of the valve chest; a valve element that is rotatably disposed in the valve chest and at which a flow path is formed; a first port that is communicated with the first inlet/outlet opening; a second port that is provided in parallel with the first port with the valve body interposed between the first port and the second port, and that is communicated with the second inlet/outlet opening; and a third port that is communicated with the third inlet/outlet opening and has an opening at an opposite side from the third inlet/outlet opening, and the flow path switching valve includes a rotation drive unit that is connected to the valve unit and rotates the valve element such that a communication state among the first inlet/outlet opening, the second inlet/outlet opening, and the third inlet/outlet opening is selectively switched through the flow path of the valve element, in which a plurality of the valve units are connectable in series by respectively connecting, to the first port and the second port of the valve units, the first port and the second port of another valve unit.

In this flow path switching valve, a communication state among the first inlet/outlet opening, the second inlet/outlet opening, and the third inlet/outlet opening of the valve chest can be selectively switched through the flow path of the valve element by rotating the valve element by the rotation drive unit. A plurality of valve units can be connected in series by connecting the first port and the second port of one valve unit with the first port and the second port of another valve unit, respectively, and thus combination of the valve units can easily realize flow path switching valves of various specifications, and the flow path switching valve can be downsized.

In a second aspect, in the flow path switching valve according to the first aspect, the first port and the second port each have one end provided with a female joint, and the first port and the second port each have another end provided with a male joint having a structure connectable to the female joint.

In this flow path switching valve, the first port and the second port each have one end provided with a female joint, and the first port and the second port each have the other end provided with a male joint having a structure connectable to the female joint. Therefore, for example, the first ports can be easily connected to each other, and the second ports can be easily connected to each other, in one valve unit and another valve unit.

In a third aspect, in the flow path switching valve according to the first aspect or the second aspect, a gap is provided between the first port and the second port that are adjacent to each other.

In this flow path switching valve, a gap is provided between the first port and the second port that are adjacent to each other, and therefore heat transfer is less likely to occur between, for example, a high temperature fluid flowing through the first port and, for example, a low temperature fluid flowing through the second port. Therefore, an unintended fluid temperature change can be suppressed.

In a fourth aspect, in the flow path switching valve according to any one aspect of the first to the third aspects, to one valve unit, another valve unit is connected in series, and a longitudinal direction of a plurality of the rotation drive units provided for the one valve unit and another valve unit is a direction intersecting a connection direction of the one valve unit and another valve unit.

In this flow path switching valve, the longitudinal direction of the rotation drive unit is a direction intersecting the connection direction of the valve units, and therefore an increase in the outer dimension of the flow path switching valve can be suppressed by reducing the connection pitch between the valve units.

In a fifth aspect, in the flow path switching valve according to any one aspect of the first to the fourth aspects, to one valve unit, another valve unit is connectable so as to overlap with the one valve unit at an opposite side from the rotation drive unit.

In this flow path switching valve, to one valve unit, another valve unit is connected so as to overlap with the one valve unit at the opposite side from the rotation drive unit, and thus the degree of freedom in combination of valve units can be enhanced.

In sixth aspect, in the flow path switching valve according to the fifth aspect, to the one valve unit, another valve unit is connected so as to overlap with the one valve unit, and two of the valve elements in the one valve unit and another valve unit are rotated by the one rotation drive unit.

In this flow path switching valve, the two valve elements in the overlapping two valve units are rotated by the one rotation drive unit, and therefore the number of parts and the cost can be reduced as compared with a case in which two valve units are each provided with a rotation drive unit.

In a seventh aspect, in the flow path switching valve according to any one aspect of the first to the sixth aspects, at least four of the valve units are connected in series.

This flow path switching valve can easily realize flow path switching valves of more specifications.

### Advantageous Effects of Invention

According to the disclosure, flow path switching valves of various specifications can be easily realized.

### BRIEF DESCRIPTION OF DRAWINGS

Fig. 1 is a perspective view illustrating an overall configuration of a flow path switching valve according to an embodiment of the disclosure.
Fig. 2 is a perspective view illustrating an example in which a storage tank is attached to a flow path switching valve.
Fig. 3 is a perspective view illustrating an example in which a storage tank and a pump are attached to a flow path switching valve.
Fig. 4 is a partially broken perspective view illustrating a flow path switching valve in which two valve units overlap with each other and two valve elements are rotated by one rotation drive unit.
Fig. 5 is a partially broken perspective view illustrating a valve unit.
Fig. 6 is a partially broken perspective view illustrating a valve unit.
Fig. 7 is a front view illustrating a state in which a valve unit is viewed from a male joint side of a first flow path.
Fig. 8 is a partial sectional view illustrating a state in which a valve unit is viewed from a side of an opening of a third flow path and a second flow path is cut in the radial direction.
Fig. 9 is a front view illustrating a valve element.
Fig. 10 is a bottom view illustrating a valve element.

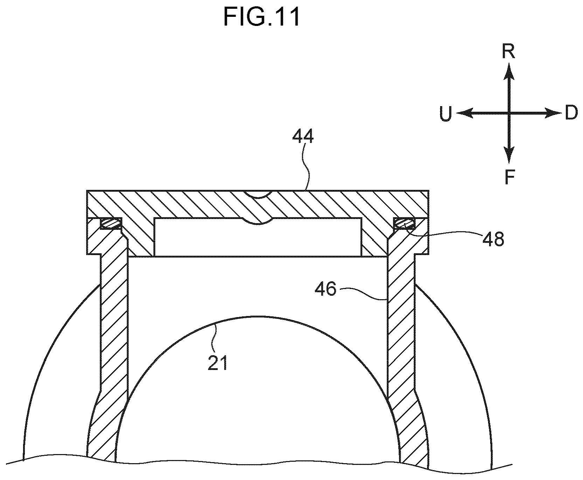

Fig. 11 is an enlarged sectional view illustrating a state in which an opening portion provided in the middle of a first flow path is closed by a lid member.
Fig. 12 is a sectional view illustrating a configuration of a flow path switching valve including two valve units overlapping with each other in which, in one valve unit, a portion overlapping another valve unit serves as a lid that closes a valve chest of another valve unit.
Fig. 13 is a sectional view illustrating a flow path switching valve according to Modified Example 1.
Fig. 14 is a sectional view illustrating a flow path switching valve according to Modified Example 1.
Fig. 15 is a sectional view illustrating a state of the flow path switching valve according to Modified Example 2 in which six valve units are connected in series.
Fig. 16 is a sectional view illustrating a valve unit according to Modified Example 2.

### DESCRIPTION OF EMBODIMENTS

Hereinafter, embodiments for carrying out the disclosure will be described with reference to the drawings. Constituent elements denoted by the same reference signs in the drawings mean the same constituent elements. Note that overlapping descriptions and overlapping reference signs may be omitted in the embodiments described below. All of the drawings used in the following description are schematic, and a dimensional relationship among elements, a ratio among elements, and the like illustrated in a drawing do not necessarily coincide with actual ones. Dimensional relationships among elements, ratios among elements, and the like in a plurality of drawings also do not necessarily coincide with each other.

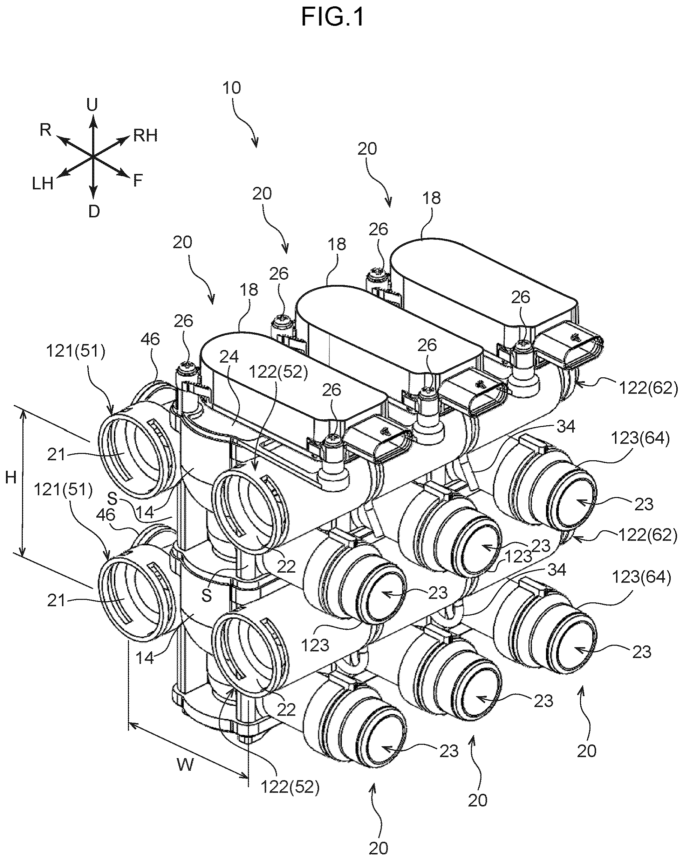

In the present description, descriptions indicating the position and the direction such as up and down, left and right, and front and rear are based on the direction arrow symbol in Fig. 1, and does not refer to the position and the direction in an actual use state. In Fig. 1, "U" indicates the upward direction (upper side),"D" indicates the downward direction (lower side), "LH" indicates the left direction (left side),"RH" indicates the right direction (right side), "F" indicates the front direction (front side), and "R" indicates the rear direction (rear side). The "up-down direction" means the direction of an arrow U and the direction of an arrow D. The "left-right direction" means the direction of an arrow LH and the direction of an arrow RH. The "front-rear direction" means the direction of an arrow F and the direction of an arrow R.

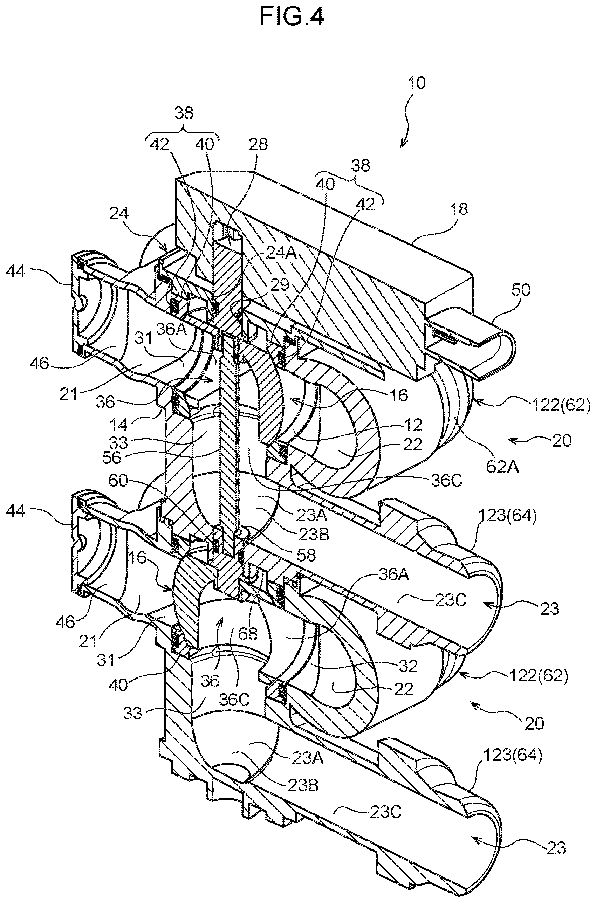

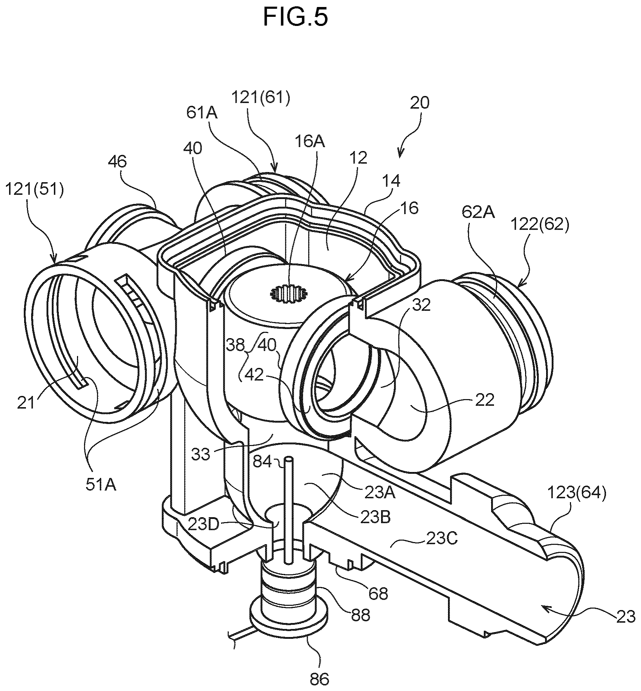

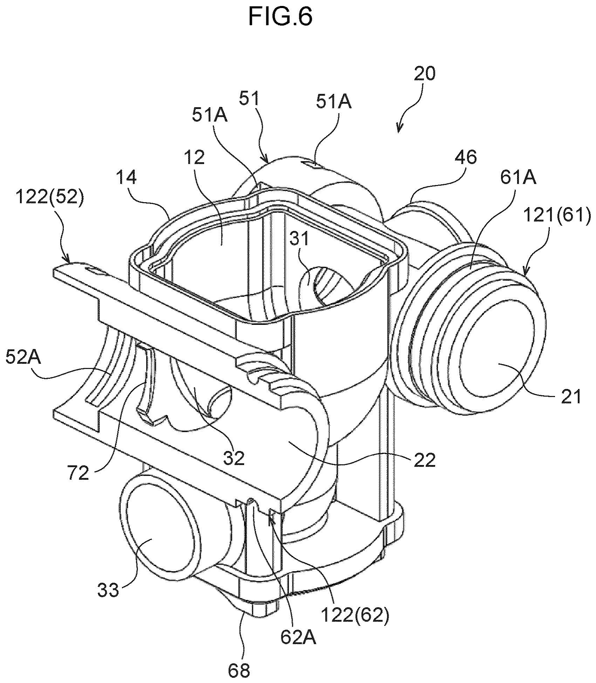

Fig. 1 is a perspective view illustrating an overall configuration of a flow path switching valve 10 according to an embodiment of the disclosure. In the flow path switching valve 10, three valve units 20 are connected in the left-right direction, and each valve unit 20 overlaps with another valve unit 20 on the lower side of the valve unit 20. That is, six valve units 20 are combined. Fig. 4 is a partially broken perspective view illustrating a flow path switching valve in which two valve units 20 overlap with each other and two valve elements are rotated by one rotation drive unit. Fig. 4 corresponds to a view of two upper and lower valve units 20 extracted from Fig. 1. Figs. 5 and 6 are partially broken perspective views illustrating one valve unit 20.

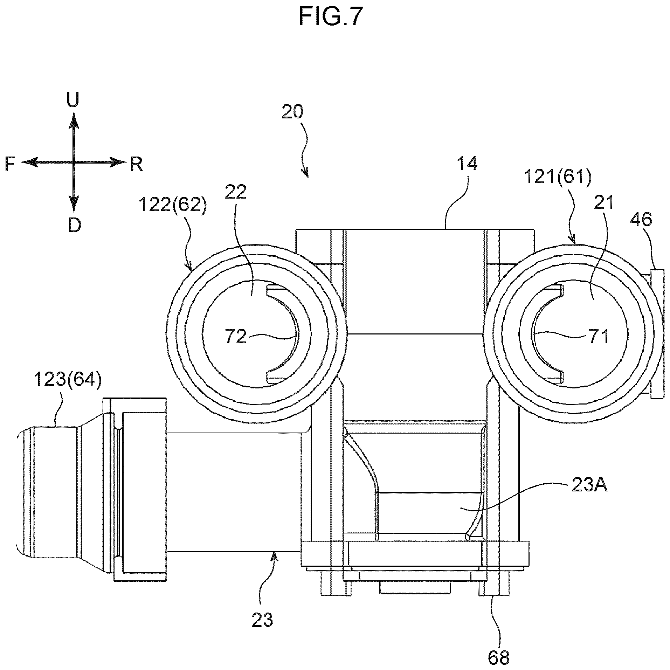

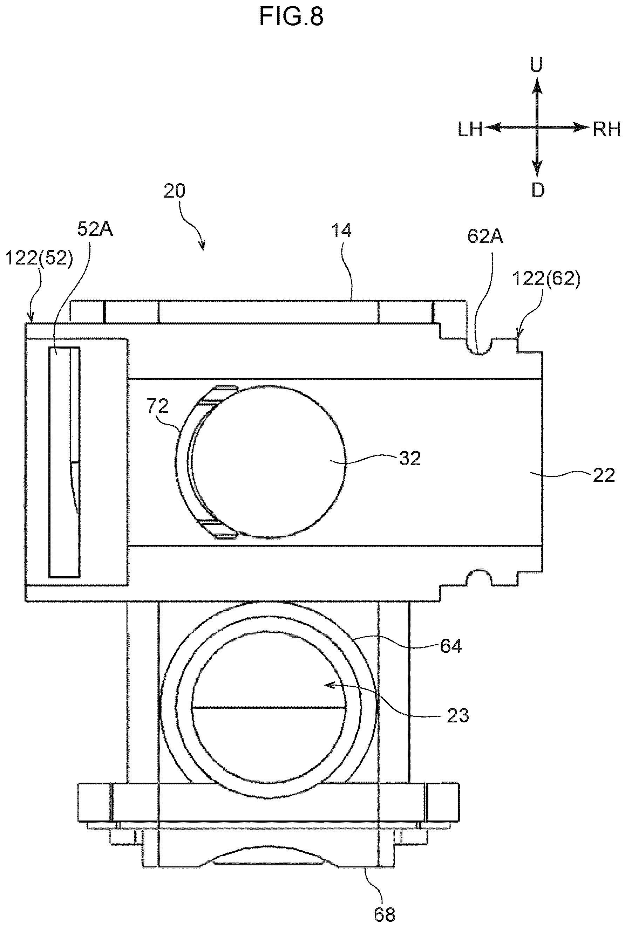

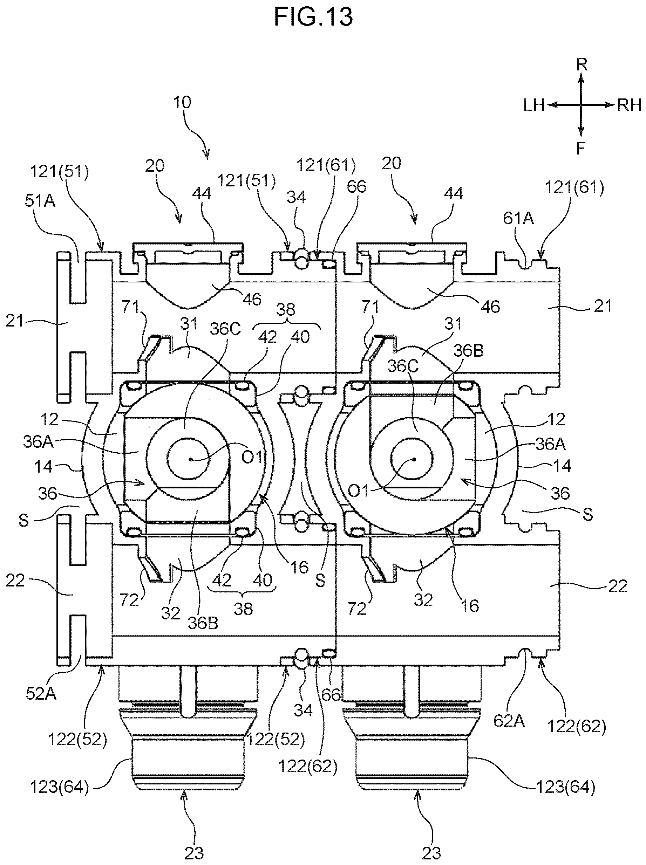

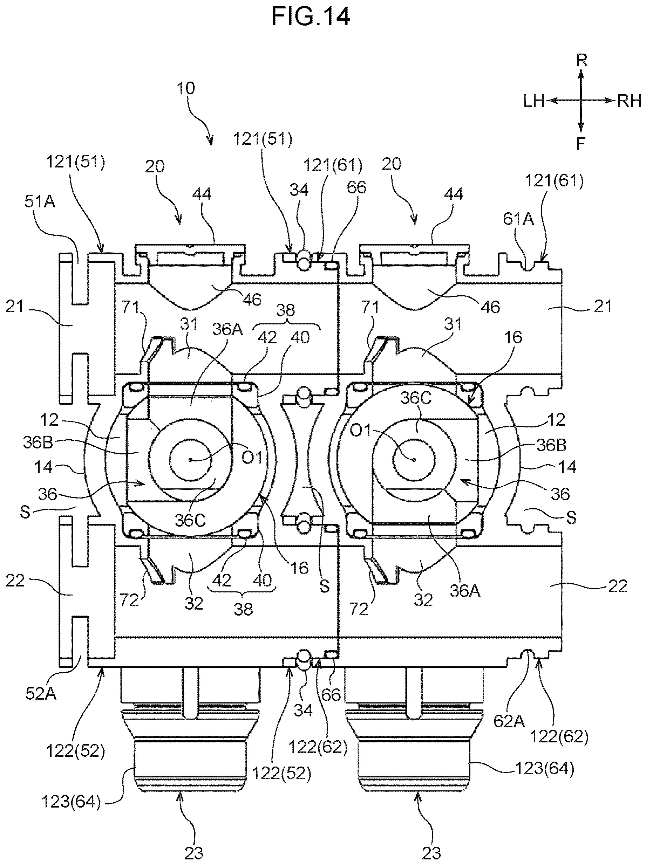

The flow path switching valve 10 is used as, for example, a rotary three-way valve (Fig. 5) or a rotary four-way valve (Figs. 13 and 14) that switches a flow path of a fluid flowing in an engine room or the like of an automobile. As shown in Figs. 4 to 8, the flow path switching valve 10 includes a valve unit 20 and a rotation drive unit 18.

### [Valve Unit]

The valve unit 20 includes a valve body 14, a valve element 16, a first port 121, a second port 122, and a third port 123. In the example shown in Fig. 5, the valve unit 20 is, for example, a three-way valve that switches a state in which the first port 121 and the third port 123 communicate with each other, a state in which the second port 122 and the third port 123 communicate with each other, and a state in which the first port 121, the second port 122, and the third port 123 do not communicate with each other.

### (Valve Body)

In Fig. 6, the valve body 14 is made of, for example, a synthetic resin, and includes a valve chest 12 formed inside the valve body 14. The valve chest 12 is opened upward, and a valve element 16 and a sealing portion 38 described below are inserted from the upper direction. On the wall surface forming the valve chest 12, for example, a first inlet/outlet opening 31 and a second inlet/outlet opening 32 are formed that face each other and through each of which a fluid enters or exits. In an example, the first inlet/outlet opening 31 is formed on the rear wall surface of the valve chest 12, and the second inlet/outlet opening 32 is formed on the front wall surface of the valve chest 12. That is, the first inlet/outlet opening 31 and the second inlet/outlet opening 32 face each other in the front-rear direction of the valve chest 12. Furthermore, a third inlet/outlet opening 33 is formed on the bottom surface of the valve chest 12.

### (Valve Element)

In Figs. 4, 5, 9, and 10, the valve element 16 is a ball-shaped member made of, for example, a synthetic resin, and is rotatably disposed in the valve chest 12. In an upper portion of the valve element 16, an insertion hole 16A is formed into which a valve shaft 28 of the rotation drive unit 18 is inserted. The valve shaft 28 and the insertion hole 16A are engaged with each other around the axial direction of the valve shaft 28 to transmit rotation of the valve shaft 28 to the valve element 16. The insertion hole 16A penetrates, for example, to a flow path 36 of the valve element 16.

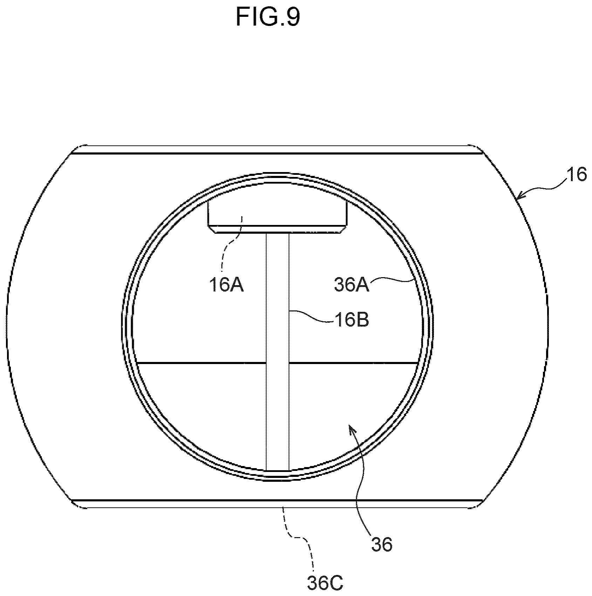

The flow path (internal flow path) 36 is provided inside the valve element 16 in order to make the first inlet/outlet opening 31, the second inlet/outlet opening 32, and the third inlet/outlet opening 33 of the valve body 14 communicate selectively, in other words, in order to switch the communication states of the first inlet/outlet opening 31, the second inlet/outlet opening 32, and the third inlet/outlet opening 33 selectively. Specifically, as shown in Fig. 9, in the valve element 16, a lateral hole 36A is formed that leads from the outer periphery (side portion) of the valve element 16 to the flow path 36. Furthermore, in the valve element 16, a lower hole 36C is formed that leads from the outer periphery (lower portion) of the valve element 16 to the flow path 36. The flow path 36 communicates from the lateral hole 36A to the lower hole 36C. The lateral hole 36A can face the first inlet/outlet opening 31 or the second inlet/outlet opening 32 according to the state of the valve element 16. In any of the inlet/outlet openings, in a state in which the lateral hole 36A does not face the inlet/outlet opening, the valve element 16 is closed in close contact with a sheet member 40 described below.

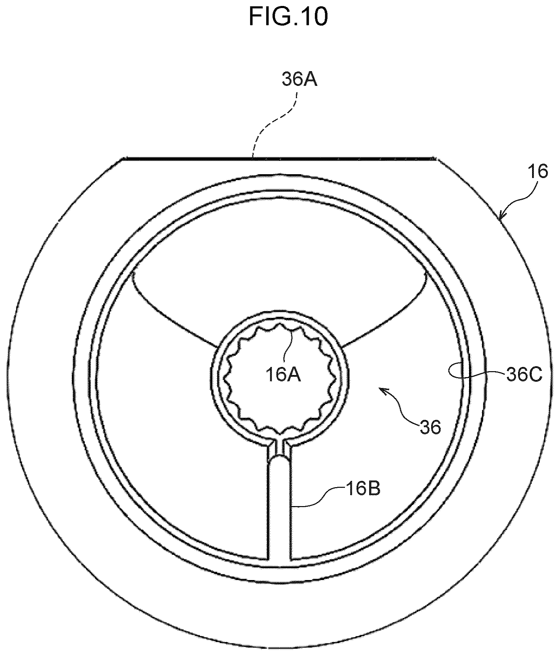

As shown in Figs. 9 and 10, a rib 16B extending in the direction toward the third inlet/outlet opening 33 (up-down direction) is formed in the flow path 36 of the valve element 16. The rib 16B is, for example, a thin plate-shaped protrusion, and is formed, for example, on the inner wall in the inner side of the lateral hole 36A in the flow path 36 of the valve element 16.

In Figs. 4 and 5, a sealing portion 38 is provided for sealing between the valve element 16 and each of the first inlet/outlet opening 31 and the second inlet/outlet opening 32. The sealing portion 38 includes, for example, a sheet member 40 and an O-ring 42. The sheet member 40 is made of, for example, a synthetic resin, and is formed into an annular shape having an opening corresponding to the first inlet/outlet opening 31 or the second inlet/outlet opening 32. The sheet member 40 is disposed around each of the first inlet/outlet opening 31 and the second inlet/outlet opening 32 on the inner wall surface (front and rear wall surfaces of the valve chest 12) of the valve body 14. The valve element 16 is sandwiched between the two sheet members 40, and is rotatably and slidably disposed in contact with each of the sheet members 40.

The space between the sheet member 40 and the valve body 14 is sealed by the O-ring 42, for example, airtightly and watertightly. The O-ring 42 is attached to, for example, an O-ring groove (not illustrated) formed in the sheet member 40.

In an example, polyphenylene sulfide (PPS) can be used in the valve body 14 and the valve element 16, fluororesin (PTFE) can be used in the sheet member 40, and synthetic rubber can be used in the O-ring 42.

### (Rotation Drive Unit)

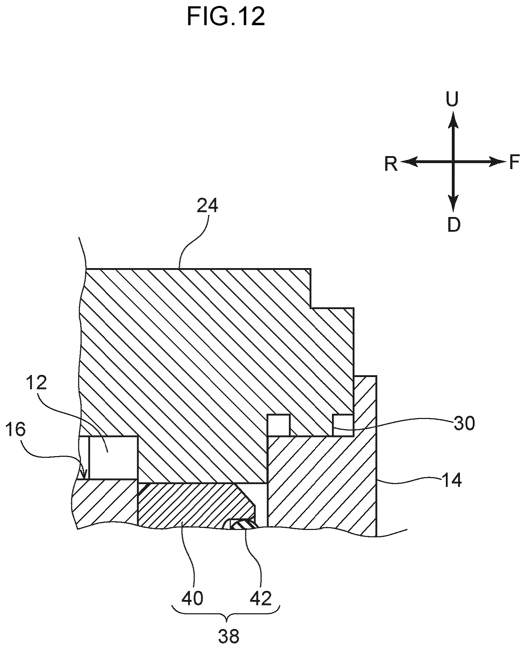

In Fig. 4, the rotation drive unit 18 is a device that is connected to the valve unit 20 and rotates the valve element 16 such that a communication state among the first inlet/outlet opening 31, the second inlet/outlet opening 32, and the third inlet/outlet opening 33 is selectively switched through the flow path of the valve element 16. The rotation drive unit 18 is disposed above the valve body 14 in the upper valve unit 20. Specifically, for example, a bracket 24 is fixed onto the upper valve body 14, and the rotation drive unit 18 is fixed onto the bracket 24 using, for example, a screw 26 (Fig. 1). An upward opening (Fig. 5) in the valve chest 12 of the upper valve body 14 is closed by, for example, the bracket 24 (Fig. 12). In other words, the bracket 24 has a shape that closes the opening of the valve chest 12. The bracket 24 is welded, in a state of being inlay fitted, to the inside of the opening of the valve chest 12. The bracket 24 is provided with a protrusion 30. The protrusion 30 faces or abuts the edge of the valve chest 12 in the valve body 14. The protrusion 30 may be a melting margin. The protrusion 30 may be provided not on the bracket 24 but on the valve body 14.

The rotation drive unit 18 is, for example, a geared motor. The rotation drive unit 18 is provided with, for example, a connector 50 to which wiring for communication with a control unit and for power supply is connected. The valve shaft 28 as an output shaft is coupled to the rotation drive unit 18. The valve shaft 28 is inserted through a through hole 24A formed in the bracket 24. An O-ring 29 is attached to the valve shaft 28. The O-ring 29 ensures watertightness between the valve shaft 28 and the through hole 24A. The lower end of the valve shaft 28 is inserted into the insertion hole 16A of the valve element 16 (Fig. 5).

In Figs. 1 to 3, the longitudinal direction of a plurality of the rotation drive units 18 provided for the valve units 20 respectively is set to a direction intersecting the connection direction of the valve units 20. For example, specifically, the longitudinal direction of the plurality of the rotation drive units 18 is set to the direction orthogonal to the connection direction of the valve units 20. In other words, the short direction of the plurality of the rotation drive units 18 is the connection direction of the valve units 20. The angle formed by the longitudinal direction of the rotation drive units 18 and the connection direction of the valve units 20 can be changed, if appropriate, within a range in which adjacent rotation drive units 18 do not interfere with each other.

### (First Flow Path, Second Flow Path, and Third Flow Path)

In Figs. 4 to 6, the first flow path 21, the second flow path 22, and the third flow path 23 are flow paths inside the first port 121, the second port 122, and the third port 123, respectively.

The first flow path 21 is, for example, opened at both ends, and communicates with the first inlet/outlet opening 31 of the valve chest 12. The first flow path 21 extends, for example, linearly in the left-right direction. The first inlet/outlet opening 31 is connected to the middle of the first flow path 21. Thus, the first flow path 21 and the first inlet/outlet opening 31 are formed into a substantially T shape in plan view (see Figs. 13 and 14).

The second flow path 22 is provided in parallel with the first flow path 21 with the valve body 14 interposed between the first flow path 21 and the second flow path 22, and, for example, opened at both ends, and communicates with the second inlet/outlet opening 32. The second flow path 22 extends, for example, linearly in the left-right direction. The second inlet/outlet opening 32 is connected to the middle of the second flow path 22. Thus, the second flow path 22 and the second inlet/outlet opening 32 are formed into a substantially T shape in plan view (see Figs. 13 and 14).

As shown in Fig. 1, the first flow path 21 and the second flow path 22 have one end provided with female joints 51 and 52, respectively. As shown in Figs. 5 and 6, the first flow path 21 and the second flow path 22 have the other end provided with male joints 61 and 62, respectively. The male joints 61 and 62 are formed to be connectable to the female joints 51 and 52, respectively. Annular grooves 61A and 62A are formed on the outer peripheries of the male joints 61 and 62, respectively. In the female joints 51 and 52, for example, a pair of arc-shaped slits 51A and a pair of arc-shaped slits 52A are formed, respectively. As shown in Figs. 13 and 14, the male joints 61 and 62 are fitted into the female joints 51 and 52, respectively, and clips 34 are fitted into the grooves 61A and 62A through the slits 51A and 52A, respectively, to form a structure in which disconnection of joints is prevented. The water stop at each connection portion of joints is achieved using, for example, an O-ring 66. With such a joint structure, the first flow path 21 and the second flow path 22 of one valve unit 20 can be connected with the first flow path 21 and the second flow path 22 of another valve unit 20, respectively (see Figs. 1, 13, and 14). Note that this joint structure is an example, and any other joint structure can be used.

In Figs. 6 to 8, 13, and 14, a first protruding portion 71 protruding from the first inlet/outlet opening 31 side toward the inside of the first flow path 21 is provided at a connection portion of the first flow path 21 with the first inlet/outlet opening 31. The first protruding portion 71 is, for example, an arc-shaped protrusion formed, on the first flow path 21, along the opening of the first inlet/outlet opening 31. The range of the first protruding portion 71 is, for example, less than half the circumference of the inner peripheral surface of the first flow path 21 in the first inlet/outlet opening 31 side. One surface of the first protruding portion 71 in the left-right direction is a recess surface obtained by extending a part of the inner wall of the first flow path 21. In the illustrated example, the first protruding portion 71 is provided on the left side of the first inlet/outlet opening 31. The first protruding portion 71 may be provided on the right side of the first inlet/outlet opening 31, or may be provided on both left and right sides of the first protruding portion 71.

Furthermore, a second protruding portion 72 protruding from the second inlet/outlet opening 32 side toward the inside of the second flow path 22 is provided at a connection portion of the second flow path 22 with the second inlet/outlet opening 32. The second protruding portion 72 is, for example, an arc-shaped protrusion formed, on the second flow path 22, along the opening of the second inlet/outlet opening 32. The range of the second protruding portion 72 is, for example, less than half the circumference of the inner peripheral surface of the second flow path 22 in the second inlet/outlet opening 32 side. One surface of the second protruding portion 72 in the left-right direction is a recess surface obtained by extending a part of the inner wall of the second flow path 22. In the illustrated example, the second protruding portion 72 is provided on the left side of the second inlet/outlet opening 32. The second protruding portion 72 may be provided on the right side of the second inlet/outlet opening 32, or may be provided on both left and right sides of the second protruding portion 72.

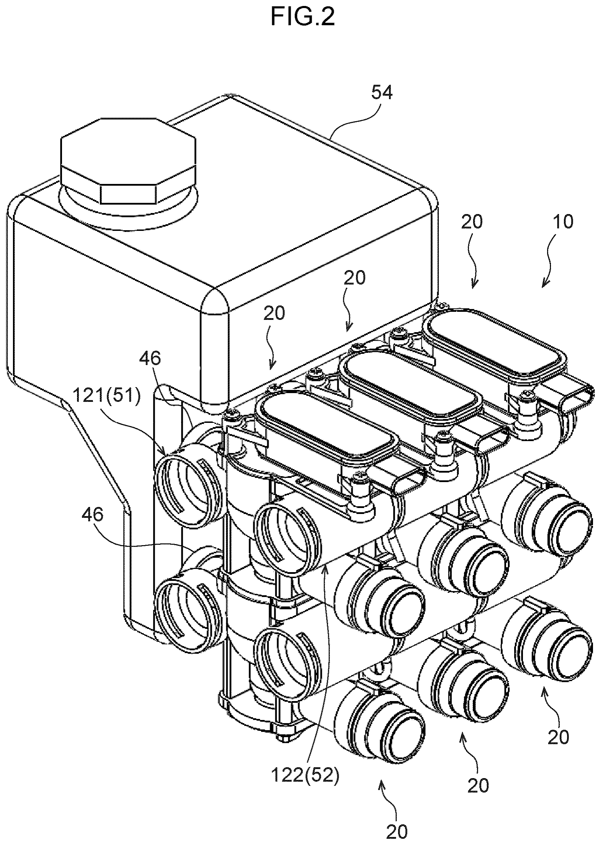

As shown in Figs. 1, 2, 4, and 9, a sub flow path 46 closed by a lid body 44 may be provided at, for example, a position facing the first inlet/outlet opening 31 in the first flow path 21. Water is shut out of the space between the lid body 44 and the end of the sub flow path 46 by welding or with a sealing member such as an O-ring 48. The sub flow path 46 can also be used when the lid body 44 is removed. To the sub flow path 46, for example, a storage tank 54 can be connected. In a case in which the valve units 20 overlap with each other in the up-down direction, two upper and lower sub flow paths 46 are present. The two sub flow paths 46 can also be connected to a storage tank 54 provided with two connection ports (Fig. 2). In this case, the storage tank 54 may have two storage chambers including the two connection ports respectively and partitioned from each other. Thus, the same kind of fluids having different temperatures can be separately stored.

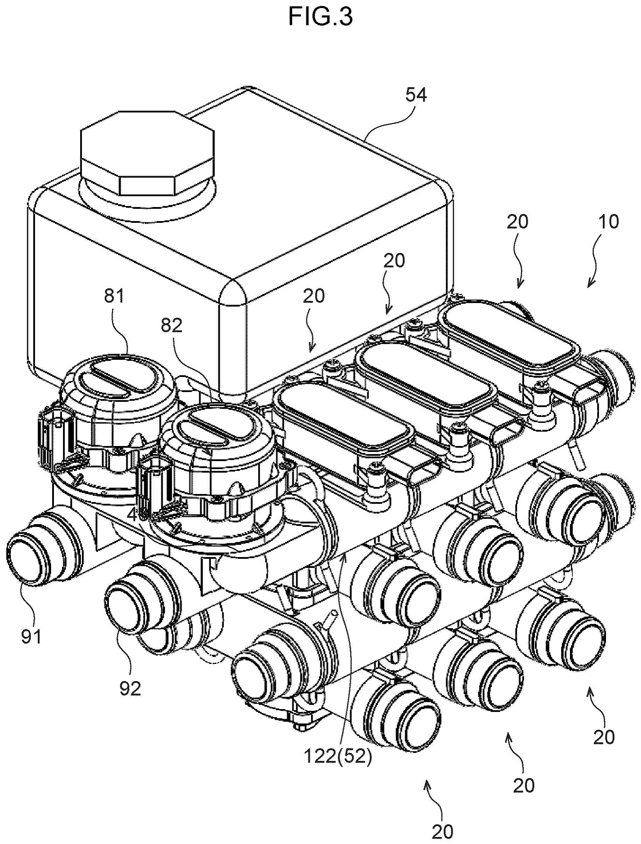

Pumps 81 and 82 can be attached to the female joint 51 or the male joint 61 of the terminal first flow path 21 and the female joint 52 or the male joint 62 of the terminal second flow path 22, respectively, in the flow path switching valve 10. In the example shown in Fig. 3, the pump 81 is attached to the female joint 51 of the first flow path 21 in the upper valve unit 20 (see Fig. 2). The pump 82 is attached to the female joint 52 of the second flow path 22 in the upper valve unit 20. The pump 81 has a joint 91 serving as a fluid inlet and outlet port. The pump 82 has a joint 92 serving as a fluid inlet and outlet port. The pump 81 can supply a fluid from another apparatus to the first flow path 21, and can supply a fluid in the first flow path 21 to another apparatus, via the joint 91. The pump 82 can supply a fluid from another apparatus to the second flow path 22, and can supply a fluid in the second flow path 22 to another apparatus, via the joint 92.

In Figs. 4, 5, and 7, the third flow path 23 communicates with the third inlet/outlet opening 33, and is opened at the opposite side from the third inlet/outlet opening 33. Specifically, the third flow path 23 has a bent portion 23A. The third inlet/outlet opening 33 is positioned above the bent portion 23A. The end of the third flow path 23 on the opening side is positioned, for example, in front of the bent portion 23A, and protrudes, for example, forward of the second flow path 22. The end of the third flow path 23 on the opening side is provided with, for example, a male joint 64 connectable to a pipe to another apparatus.

As shown in Figs. 4 and 5, a portion facing the third inlet/outlet opening 33 in the bent portion 23A of the third flow path 23, that is, a portion below the third inlet/outlet opening 33 is provided with, for example, a spherical recess 23B. The recess 23B is formed into a substantially hemispherical shape. The recess 23B is recessed downward of the bottom 23C of the lateral flow path in front of the bent portion 23A. Thus, a part of a fluid entering the third flow path 23 from the third inlet/outlet opening 33 once falls into the recess 23B and then enters the lateral flow path of the third flow path 23.

In the example illustrated in Fig. 5, a through hole 23D is formed at the bottom of the recess 23B. A valve shaft 58 can pass through the through hole 23D (Fig. 4). Water is shut out of the space between the valve shaft 58 and the through hole 23D with an O-ring 60. In a case in which there is no valve unit overlapping below, for example, a structure without the through hole 23D at the bottom of the recess 23B is adopted as in the lower valve unit 20 in Fig. 4. A configuration may be adopted in which the through hole 23D is provided but closed by another member (for example, a closing portion 86). For example, the closing portion 86 may include a temperature sensor 84. The temperature sensor 84 is, for example, supported by the closing portion 86, and disposed so that the distal end is positioned in the third flow path 23. For example, an O-ring 88 is attached to the closing portion 86. The O-ring 88 ensures watertightness between the closing portion 86 and the through hole 23D. Using the temperature sensor 84 enables accurate measurement of the temperature in the third flow path 23.

### (First Port, Second Port, and Third Port)

The first port 121 is, for example, a cylindrical portion that communicates with the first inlet/outlet opening 31 and protrudes from the valve body 14. The second port 122 is, for example, a cylindrical portion that communicates with the second inlet/outlet opening 32 and protrudes from the valve body 14. The third port 123 is, for example, a cylindrical portion that communicates with the third inlet/outlet opening 33 and protrudes from the valve body 14. The female joints 51 and 52 are provided at one ends of the first port 121 and the second port 122, respectively. The male joints 61 and 62 are provided at the other ends of the first port 121 and the second port 122, respectively. In other words, the first port 121 has one end provided with the male joint 61, and the first port 121 has the other end provided with the female joint 51. The second port 122 has one end provided with the male joint 62, and the second port 122 has the other end provided with the female joint 52. A gap S may be provided between the first port 121 and the second port 122 adjacent to each other (Figs. 13 and 14).

A plurality of the valve units 20 can be connected in series by respectively connecting the first port 121 and the second port 122 of one valve unit 20 with the first port 121 and the second port 122 of another valve unit 20.

### [Overlapping of Valve Units]

In Figs. 1 and 4, in the present embodiment, to one valve unit 20, another valve unit 20 can be connected so as to overlap the one valve unit 20 on the opposite side from the rotation drive unit 18. In the upper valve unit 20, a portion overlapping the lower valve unit 20 is a lid 68 that closes the valve chest 12 of the lower valve unit 20. This closing structure is substantially the same as the closing structure of the valve chest 12 by the bracket 24 in Fig. 12, and the bottom of the upper valve body 14 is welded, in a state of being inlay fitted, to the inside of the opening of the valve chest 12 in the lower valve body 14.

As shown in Fig. 4, a structure may be adopted in which another valve unit 20 is connected to one valve unit 20 so as to overlap with the one valve unit 20 and two valve elements 16 in the two valve units 20 are rotated by one rotation drive unit 18. In this example, the valve shaft 28 of the upper valve unit 20 and the valve shaft 58 of the lower valve unit 20 are connected by a connecting shaft 56. The connecting shaft 56 connects the upper and the lower valve shafts 28 and 58 through the inside of the upper valve element 16 and the vertical flow path of the third flow path 23. When the upper valve shaft 28 is rotationally driven by the rotation drive unit 18, the rotation is transmitted to the lower valve shaft 58 via the connecting shaft 56, and the upper and the lower valve elements 16 rotate in synchronization.

The upper and the lower valve units 20 may be each provided with a rotation drive unit 18 to perform rotation control of the valve element 16 separately.

In Fig. 1, the center-to-center distance W between the end of the first flow path 21 and the end of the second flow path 22 in one valve unit 20 may be equal to the center-to-center distance H between the ends of the first flow paths 21 in the overlapping direction in a state in which another valve unit 20 is connected to the one valve unit 20 so as to overlap with the one valve unit 20. That is, W = H may be satisfied.

As shown in Figs. 1 and 4, in a case in which the valve units 20 overlap each other, the gap S is also formed between the two first ports 121 and between the two second ports 122 of the overlapping valve units 20.

### (Operation)

The embodiment is configured as described above, and its operation will be described below. In Fig. 4, in the flow path switching valve 10 according to the embodiment, a communication state among the first inlet/outlet opening 31, the second inlet/outlet opening 32, and the third inlet/outlet opening 33 of the valve chest 12 can be selectively switched through the flow path 36 of the valve element 16 by rotating the valve element 16 by the rotation drive unit 18. The first inlet/outlet opening 31 and the second inlet/outlet opening 32 face each other with the valve chest 12 interposed therebetween, and one lateral hole 36A is formed in the valve element 16, and therefore the flow path can be switched by rotating the valve element 16 by 180°.

A plurality of the valve units 20 can be connected in series by connecting the first port 121 and the second port 122 of one valve unit 20 with the first port 121 and the second port 122 of another valve unit 20, respectively, and thus combination of the valve units 20 can easily realize flow path switching valves of various specifications, and the flow path switching valve 10 can be downsized.

Specifically, the first port 121 and the second port 122 have one end provided with the female joints 51 and 52, respectively, and the first port 121 and the second port 122 have the other end provided with the male joints 61 and 62, respectively. The male joints 61 and 62 can be connected to the female joints 51 and 52, respectively.

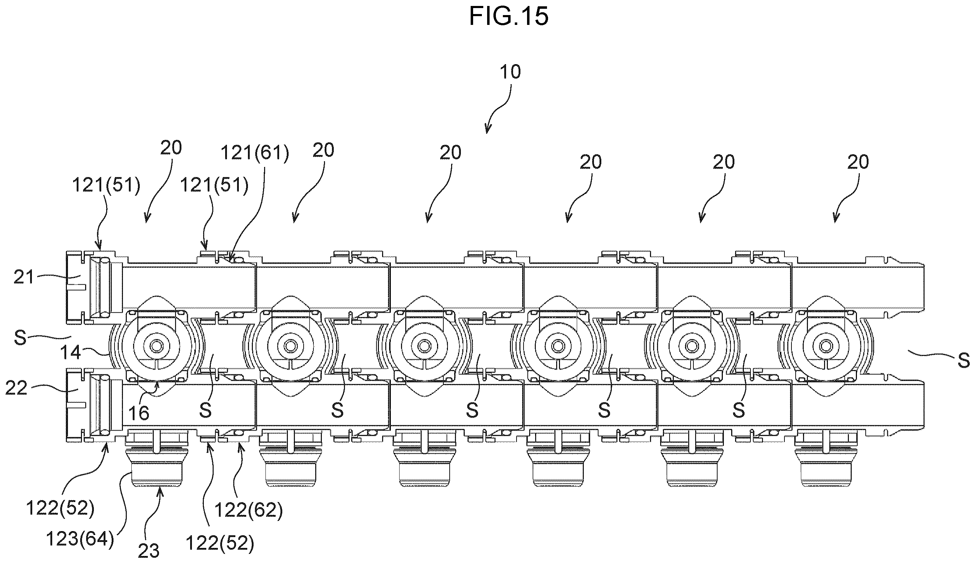

Therefore, for example, the first ports 121 can be easily connected to each other, and the second ports 122 can be easily connected to each other, in one valve unit 20 and another valve unit 20. As shown in Fig. 15, at least four, for example, six valve units 20 may be connected in series. Thus, flow path switching valves of more specifications can be easily realized.

In Fig. 1, for example, when W = H is satisfied, in a case where in which, in the direction of the first flow paths 21 and the second flow paths 22 of two overlapping valve units 20, another two overlapping valve units 20 are connected, connection is possible not only between the first ports 121 and between the second ports 122 but also between the first port 121 and the second port 122. That is, a pair of two valve units 20 can be connected to another pair in a state of being rotated by 90° from each other. Therefore, the degree of freedom in combination of the valve units 20 can be further enhanced. Note that the pairs of two valve units 20 may be rotated from each other by an angle other than 90°.

A fluid flowing from the valve chest 12 through the third inlet/outlet opening 33 into the third flow path 23 passes through the bent portion 23A. In a case in which the portion facing the third inlet/outlet opening 33 in the bent portion 23A of the third flow path 23 is provided with the spherical recess 23B, the resistance of the fluid is smaller than in a configuration in which the portion has no recess 23B and is simply bent. Therefore, the pressure loss in the third flow path 23 can be suppressed.

As shown in Figs. 9 and 10, in a case in which the rib 16B extending in the direction toward the third inlet/outlet opening 33 is formed in the flow path 36 of the valve element 16, a fluid flowing in the valve element 16 can be straightened. At the time of mounting the valve element 16 in the valve chest 12, the direction of the valve element 16 can be easily adjusted by applying a force to the rib 16B.

As shown in Figs. 6 to 8, 13, and 14, in a case in which the first protruding portion 71 is provided at the connection portion of the first flow path 21 with the first inlet/outlet opening 31 of the valve chest 12, the first protruding portion 71 disturbs the flow of a fluid in the first flow path 21. Thus, the fluid flowing through the first flow path 21 can be guided to the first inlet/outlet opening 31. In a case in which the second protruding portion 72 is provided at the connection portion of the second flow path 22 with the second inlet/outlet opening 32 of the valve chest 12, the second protruding portion 72 disturbs the flow of a fluid in the second flow path 22, and thus the fluid flowing through the second flow path 22 can be guided to the second inlet/outlet opening 32. Thus, the inflow of a fluid can be promoted from the first flow path 21 and the second flow path 22 to the valve chest 12.

As shown in Figs. 1 and 4, the degree of freedom in combination of the valve units 20 can be enhanced by enabling one valve unit 20 to be connectable to another valve unit 20 overlapping the one valve unit 20 on the opposite side from the rotation drive unit 18.

In a case in which in one valve unit 20, a portion overlapping another valve unit 20 is the lid 68 that closes the valve chest 12 of another valve unit 20, another part is unnecessary for closing the valve chest 12 of another valve unit 20 at the time of setting the one valve unit 20 and another valve unit 20 to overlap each other. Therefore, an increase in the number of parts can be suppressed, and the workability can be enhanced at the time of connecting the valve units 20 so as to overlap with each other.

In a case in which two valve elements 16 in overlapping two valve units 20 are rotated by one rotation drive unit 18, the number of parts and the cost can be reduced as compared with a case in which two valve units 20 are each provided with a rotation drive unit 18.

Furthermore, the gap S is provided between the first port 121 and the second port 122 that are adjacent to each other, and therefore heat transfer is less likely to occur between, for example, a high temperature fluid flowing through the first port 121 and, for example, a low temperature fluid flowing through the second port 122. Therefore, an unintended fluid temperature change can be suppressed.

In addition, the longitudinal direction of the rotation drive unit 18 is set to a direction intersecting the connection direction of the valve units 20, and therefore an increase in the outer dimension of the flow path switching valve 10 can be suppressed by reducing the connection pitch between the valve units 20.

As described above, according to the embodiment, flow path switching valves of various specifications can be easily realized, and a flow path switching valve can be downsized. Therefore, an improved flow path switching valve is provided.

### (Modified Example 1)

The valve unit 20 is not limited to a three-way valve, and may be, for example, a four-way valve as shown in Figs. 13 and 14. In this case, in the valve element 16, a lateral hole 36B joining from the outer periphery (side portion) of the valve element 16 to the center of the lateral hole 36A is formed, for example, in the direction orthogonal to the rotation axis O1 of the valve element 16 and orthogonal to the lateral hole 36A. Rotation of the valve element 16 by 90° can switch a state in which the first inlet/outlet opening 31 and the third inlet/outlet opening 33 communicate with each other and a state in which the second inlet/outlet opening 32 and the third inlet/outlet opening 33 communicate with each other.

### (Modified Example 2)

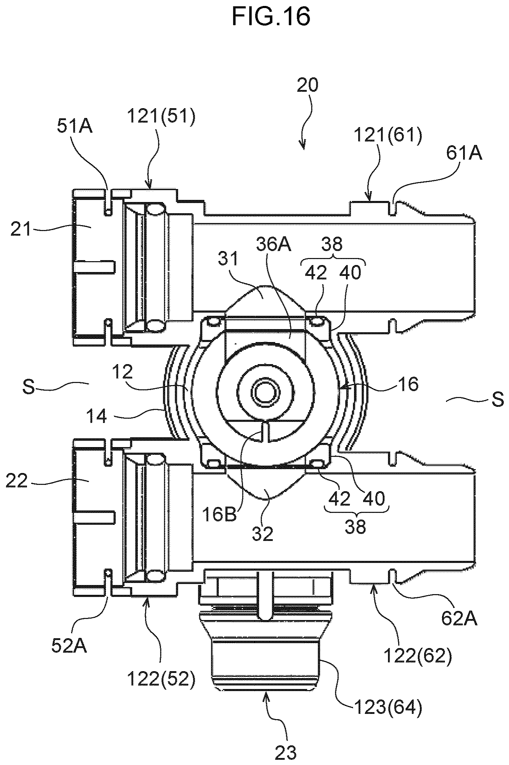

As shown in Fig. 15, in the flow path switching valve 10 according to Modified Example 2, at least four valve units 20 may be connected in series. In this example, for example, six valve units 20 are connected in series. As shown in Figs. 15 and 16, the protruding lengths of the first port 121 and the second port 122 of the valve unit 20 from the valve body 14 are longer than the protruding lengths of the first port 121 and the second port 122 in Figs. 13 and 14. Therefore, the gap S in Fig. 16 is larger than the gap S in Figs. 13 and 14.

As in the present Modified Example, a configuration may be adopted in which the sub flow path 46 (Figs. 13 and 14, and the like) is not provided at a position facing the first inlet/outlet opening 31 in the first flow path 21.

### [Other Embodiments]

Although an example of the embodiment of the disclosure is described above, the embodiment of the disclosure is not limited to the above, and it is a matter of course that various modifications can be made in addition to the above without departing from the gist of the disclosure.

It is adopted that the first port 121 and the second port 122 have one end provided with the female joints 51 and 52, respectively, and the first port 121 and the second port 122 have the other end provided with the male joints 61 and 62 connectable to the female joints 51 and 52, respectively, but a configuration may be adopted in which such a joint structure is not included.

It is adopted that the bent portion 23A of the third flow path 23 is provided with the recess 23B, but a configuration may be adopted in which such a recess 23B is not provided. It is adopted that the rib 16B is formed in the flow path 36 of the valve element 16, but a configuration without such a rib 16B may be adopted.

It is adopted that the first protruding portion 71 is provided at the connection portion of the first flow path 21 with the first inlet/outlet opening 31 and the second protruding portion 72 is provided at the connection portion of the second flow path 22 with the second inlet/outlet opening 32, but it may be adopted that the first protruding portion 71 or the second protruding portion 72 is provided, and it may be adopted that the first protruding portion 71 and the second protruding portion 72 are not provided (Figs. 15 and 16).

It is adopted that to one valve unit 20, another valve unit 20 can be connected to overlap the one valve unit 20 on the opposite side from the rotation drive unit 18, but it may be adopted that another member is interposed between the two valve units 20. Such connection need not be possible.

It is adopted that the center-to-center distance W between the end of the first flow path 21 and the end of the second flow path 22 in one valve unit 20 is equal to the center-to-center distance H between the ends of the first flow paths 21 (W = H) in the overlapping direction in a state in which another valve unit 20 is connected to the one valve unit 20 so as to overlap with the one valve unit 20, but the center-to-center distance W may be different from the center-to-center distance H. In the flow path switching valve, a configuration is adopted in which the valve units 20 overlap each other in two stages, but the valve units 20 may overlap each other in three or more stages.

The disclosure of Japanese Patent Application No. 2023-27791 filed on February 24, 2023 is incorporated herein by reference in its entirety.

All documents, patent applications, and technical standards described herein are incorporated herein by reference to the same extent as in a case in which each document, patent application, and technical standard are specifically and individually stated to be incorporated herein by reference.

## Claims

1. A flow path switching valve, comprising:
a valve unit including: a valve body that includes a valve chest formed inside the valve body, a first inlet/outlet opening and a second inlet/outlet opening, through each of which a fluid is capable of entering or exiting, formed on a wall surface forming the valve chest, and a third inlet/outlet opening formed on a bottom surface of the valve chest; a valve element that is rotatably disposed in the valve chest and at which a flow path is formed; a first port that is communicated with the first inlet/outlet opening; a second port that is provided in parallel with the first port with the valve body interposed between the first port and the second port, and that is communicated with the second inlet/outlet opening; and a third port that is communicated with the third inlet/outlet opening and has an opening at an opposite side from the third inlet/outlet opening; and
a rotation drive unit that is connected to the valve unit and rotates the valve element such that a communication state among the first inlet/outlet opening, the second inlet/outlet opening, and the third inlet/outlet opening is selectively switched through the flow path of the valve element,
wherein a plurality of the valve units are connectable in series by respectively connecting, to the first port and the second port of the valve unit, the first port and the second port of another valve unit.

2. The flow path switching valve according to claim 1, wherein the first port and the second port each have one end provided with a female joint, and
the first port and the second port each have another end provided with a male joint having a structure connectable to the female joint.

3. The flow path switching valve according to claim 1, wherein a gap is provided between the first port and the second port that are adjacent to each other.

4. The flow path switching valve according to claim 1, wherein:
to one valve unit, another valve unit is connected in series, and
a longitudinal direction of a plurality of the rotation drive units provided for the one valve unit and another valve unit is a direction intersecting a connection direction of the one valve unit and another valve unit.

5. The flow path switching valve according to claim 1, wherein to one valve unit, another valve unit is connectable so as to overlap with the one valve unit at an opposite side from the rotation drive unit.

6. The flow path switching valve according to claim 5, wherein to the one valve unit, another valve unit is connected so as to overlap with the one valve unit, and
two of the valve elements in the one valve unit and another valve unit are rotated by the one rotation drive unit.

7. The flow path switching valve according to any one of claims 1 to 6, wherein at least four of the valve units are connected in series.
